# EUROPEAN PATENT SPECIFICATION

(11) **EP 2 867 571 B1**
(45) Date of publication and mention of the grant of the patent: **04.03.2020**
(21) Application number: 12732863.1
(22) Date of filing: 29.06.2012
(51) Int. Cl.: F16L 55/17

(54) **PIPE REPAIR KIT**
ROHRREPARATURAUSRÜSTUNG
ÉQUIPEMENT DE RÉPARATION DE TUYAU

(43) Date of publication of application: 06.05.2015
(73) Proprietor: Acorn Intellectual Properties Ltd, St Helier Jersey JE2 3QA (GB)
(72) Inventor: MANNING, John Patrick, Norfolk NR14 6SA (GB)
(74) Representative: Hutchinson, Thomas Owen
(86) International application number: PCT/GB2012/051534
(87) International publication number: WO 2013/005013

(56) References cited:
- WO-A1-2009/155640
- WO-A1-2011/036513
- AT-A4- 507 795
- FR-A1- 2 605 378
- US-A- 2 230 287
- US-A- 5 692 544

## Description

This invention relates to a pipe repair kit and to a method of repairing a pipe using the kit. The invention is applicable, particularly though not exclusively, to the repair of tubular conduits such as pipes or sections of pipe in fluid transport systems in the oil, gas or water industries, typically those that have become corroded or damaged. The invention is especially, though not exclusively, useful for the repair of flanged joints in such conduits pipes or pipe sections.

Fluid transport systems are known for conveying a wide variety of materials such as liquids and gases, with common examples including water and fuels such as gas and oil. Such systems may include, for example, oil and gas pipelines for conveying fuel over thousands of miles. The tubular conduits (i.e. pipes), used in such fluid transport of fuel and water may be made of any of a variety of materials, such as metal, for example, steel, iron copper or aluminium (or alloys of such metals), or even plastics.

In the construction of pipelines used in the transportation of fuel oil in particular, for pipe diameters typically in the range of approximately 38 cm to 152 cm (approximately 15 to 60 inches) welded flanged joints are commonly used to join sections of pipe together. However welded flanged joints suffer from a particularly detrimental disadvantage of corrosion, both inside and outside the section where the flange is welded to the pipe. As the time that the world runs out of oil grows ever nearer, it is increasingly desirable to use oil that, in the past, may have been rejected for commercial use, such rejected oil being for the most part oil containing high levels of highly corrosive sour gas. Counterproductively, however, transporting such oil via conventional pipelines increases the level of pipe corrosion typically by a factor of ten.

It is because of these mounting corrosion problems that oil companies are now facing an increased need for effective emergency repair kits, in order to repair corroded or otherwise damaged pipes in their networks, especially at the sites of welded flanged joints. However, there are only a limited number of known pipe repair kits or devices that are suitable for such repair jobs and that work satisfactorily. One such known type of pipe repair arrangement comprises a casing having two half-shells that clamp onto either side of the flange joint, encasing it in a box-like container, and which are held in place by a series of bolts that have, at best, only a limited effect in sealing the leak. In most cases the resulting repair amounts to no more than a quick patch, with limited life and efficacy. An example of one such known pipe repair assembly is that disclosed in US Patent No. US5692544 (International Pipeline, Inc).

Characteristic of most, if not all, such repair kits of this basic design, employing two half-shells that are clamped together, that are currently on the market is however the design fault that lies in the fact that no matter how much pressure is applied to the clamping bolts, the maximum point of seal is always in the region of 90 degrees to the fixing point, with no or very little clamping force applied at the point on or adjacent the pipe at or in the immediate vicinity of the bolts. This therefore leads to substantial differences in clamping pressure at circumferential intervals around the pipe or pipe joint, which compromises the sealing and repair efficacy of the arrangement as well as possibly itself causing new problems resulting from detrimental localised stresses or weaknesses or even yet further damage to the pipe or joint whose repair is being attempted.

It is therefore a primary object of the present invention to provide a pipe repair kit and a pipe repair method using same, which is effective practically in repairing leaks, fractures or similar failures in pipes, especially at, in or adjacent welded flanged joints of pipes or pipelines, which is simple in design and easy to use, and ameliorates at least some of the shortcomings of known pipe repair devices or kits such as those discussed above.

Aspects of the invention are set forth in the appended independent claim or claims. Preferred and/or optional features of the invention are set forth in the appended dependent claims.

The segmented housing comprises an odd plurality of discrete segments, of substantially equal radial width and circumferential (or arcuate) length, each being articulated with respect to an adjacent segment via respective flexible securement means, for example at least one flexible coupling element. Such flexible coupling elements linking the sequence of segments together may each preferably be in the form of a linking plate or rod, with its respective ends being swivellably attachable to the respective segment by swivellable (or hingeable) attachment means such as a loose-fitting screwthreaded device (e.g. a nut and bolt), or clip or similar swivellable (or hingeable) anchoring or fixing component.

The housing comprises an odd number of segments, so that on one diametrical side of the pipe or pipe joint, the joint or interface between any given two adjacent segments is never directly diametrically opposite a like joint or interface between adjacent segments on the opposite side of the pipe or pipe joint, i.e. it is always directly diametrically opposite a substantially central- or intermediate- or mid-portion of one segment only on the opposite side of the pipe or pipe joint. This serves to optimise the 360-degree clamping, and thus sealing pressure of the housing segments at any given point on the pipe's (or pipe joint's) circumference.

The invention is particularly (though not exclusively) concerned with repairing flanged joints, especially welded flange joints, in pipes or pipelines. Thus, according to preferred embodiments the segments forming the housing are preferably each shaped to define therewithin a hollow arcuate recess or chamber for accommodating a portion of the flange joint whose repair is to be undertaken. Preferably such a recess or chamber is defined by the segment's comprising a pair of radially extending sidewalls, each terminating at its radially inward end in an axially extending foot portion for abutment against the external wall of the pipe or pipe joint adjacent the flange or other site undergoing repair.

Each such foot portion of the segments' sidewalls preferably carries or includes sealing means, for example an (or one or more) arcuate or circumferential (or at least part-circumferential) sealing member or gasket, such as an (or a portion of an) 0-ring-type seal, for sealing the gap between the segments' sidewalls' foot portions and the pipe or pipe joint wall into abutment with which the segments are clamped. Such sealing means may conveniently be carried or located in an, or a respective, appropriately sized and shaped lateral or peripheral recess, trough, channel or groove formed (e.g. by machining or forming during the manufacturing process) in the respective sidewall foot portions. Examples of suitable 0-ring seals are well-known in the art and widely commercially available.

A particular advantage of having the especially preferably at least three discrete segments forming the housing is that as a result of the angle subtended at the centre of the pipe or pipe joint by the ends of any given segment being less than 180 degrees, then as the segments are clamped onto the pipe or pipe joint by the tensioning means, the component of clamping force at either end of each segment in a direction tangential to the pipe or pipe joint surface is reduced, and even more reduced as the number of segments is increased. This helps to reduce, or even minimise (or possibly even substantially eliminate) the undesirable tendency of the end edges of the segments that abut the pipe or pipe joint to dig into, or scratch (or similarly frictionally abrade or catch) into, the wall of the pipe or pipe joint as the segments are clamped onto the pipe or pipe joint under the pressure of the tensioning means.

The segments of the housing may be formed of any suitable material, especially for example metal (e.g. steel) or a metal alloy, but also possibly of plastics material, provided it is strong enough to withstand the clamping forces to be exerted by the tensioning mechanism without disintegration or undue deformation. Advantageously, the material of the housing segments may, if desired, be selected to have a degree, especially a low or small degree, of resilience, in order to facilitate its conforming to the shape of a pipe or pipe joint that may not be regular or is possibly uneven. The housing segments may be formed, for example, by any suitable casting, moulding or forming process, examples of which are well-known in the art.

In preferred embodiments of the invention the tensioning means which are employed to surround the secured segmented housing and clamp the segments thereof into clamping and sealing relationship with the pipe or pipe joint preferably comprise at least one tensioning element in the form of a tensioning wire, cord or strap. Such a wire, cord or strap may be single-stranded, or perhaps more preferably multi-stranded for reasons of enhanced strength, integrity and reliability. A metal, e.g. steel, tensioning wire or cord is especially preferred. (A chain-link band or strap may alternatively be employable as the tensioning element, although this may be less desirable owing to the propensity for such a device to exhibit weak spots arising from localised stress concentrations and/or manufacturing imperfections.) The tensioning means preferably extend continuously around the circumference of (i.e. substantially the full 360 degrees around) the pipe or pipe joint.

If desired or as necessary a plurality of tensioning means may be used, e.g. two, three or even more such tensioning wires or cords, preferably positioned side by side, i.e. axially spaced with respect to the pipe, with each such tensioning means preferably being independently anchorable and tensionable of the other(s).

For the purpose of tensioning the tensioning means into its/their clamping abutment or engagement against the pipe or pipe joint, the repair kit of the invention preferably further comprises one or more tightening means. Such tightening means may, for example, comprise one or more turn-buckles or screw- or nut-operated clasps or clamps, to which opposite ends of the (or each) tensioning means is/are anchored or attached, so that by simple turning or screwing of the tightening means, possibly with the aid of a tool, the (or each) tensioning means may be shortened and thereby tightened into clamping abutment or engagement with the segments of the housing which then transmit the resulting radially inward clamping and sealing force onto the pipe wall or pipe joint flange.

Depending on the particular type of tightening means used, for example if space allows or dictates, it is possible for (each) such tightening means to be configured such that opposite ends of the (or the respective) tensioning means are anchored in an offset manner, i.e. axially spaced apart (e.g. by a short distance) with respect to the pipe. Furthermore. in the case of plural tensioning means each anchored by its own discrete tightening means (e.g. turn-buckle), the turn-buckles may be disposed generally in the same region or approximate circumferential location on one side only of the pipe or pipe joint, or alternatively they may be distributed around the pipe or pipe joint's circumference at spaced-apart locations e.g. even symmetrically or equiangularly therearound, so that each tensioning means is anchored and tightenable at its own discrete circumferential location spaced from that of the others. Of course however, space availability and user-accessibility (e.g. for ease of manual tightening of the tightening means, possibly using a tool) may dictate the practical arrangement that is most preferable in any given case.

Looked at generally, therefore, it is a primary characteristic of preferred embodiments of the repair kit of the present invention that as the segmented housing is clamped into place around the pipe or pipe joint by the tensioning of the tensioning means, each of the segments exerts its clamping force principally, or predominantly, generally substantially radially inwardly of the pipe or pipe joint in the manner of a wedge.

As used herein, the terms "circumference" or "circumferential" as applied to the pipe or pipe joint is intended to cover any cross-sectional shape of pipe or pipe joint, even those not strictly circular. Generally pipes or flanged pipe joints for the repair of which the present invention is particularly aimed will generally indeed be substantially circular, as is the norm in most (if not all) industrial pipeline applications, but it is to be understood that other shapes of pipe or flanged joint, even those slightly or significantly non-circular, are intended to be within the scope of these terms as used herein.

The invention also provides a method of repairing a pipe or pipe joint using a kit according to apparatus claims.

In preferred embodiments of the above-defined method aspect of the invention, the step of tensioning the said tensioning means surrounding the secured segmented housing so as to clamp the segments thereof into clamping and is sealing relationship with the pipe or pipe joint preferably comprises tensioning the preferred tensioning element by operation of the preferred tightening means, so as to contract or shorten the tensioning element into its tightened clamping configuration in abutment against or engagement with the housing segments which thus are sealingly clamped against the pipe or pipe joint so as to effect a sealing repair thereof.

The repair kit and its method of use according to this invention may be applied in particular, though not exclusively, to the repair of flanged joints, especially welded flanged joints, in pipes or pipelines. Such joints between pipe sections are especially prone to corrosion damage, so according to preferred embodiments of the invention the segmented housing of the kit is preferably shaped and dimensioned to accommodate within it such a flanged joint between two pipe sections in a pipeline. Such pipes, and thus such flanged joints, may be of any size and scale depending on the practical application and the industry in question, so the segmented housing and the accompanying tensioning means will therefore preferably be likewise dimensioned accordingly for any specific intended practical application.

When the above-defined components are provided as elements of a self-contained pipe (or pipe joint) repair kit, they may be accompanied if desired or as necessary by appropriate instructions for use.

A preferred embodiment of the present invention in its various aspects will now be described in detail with reference to the accompanying drawings, in which:
Figure 1 is a schematic radial cross-sectional view of a preferred embodiment of pipe repair kit according to the invention in position around a flanged pipe joint being repaired;
Figure 2 is a schematic part-cut-away, axial part-cross-sectional view of the arrangement shown in Figure 1 on arrows aa-aa in Figure 1;
Figure 3 is a schematic part-cut-away, axial side view of the same arrangement as shown in Figure 2;
Figure 4 is an enlarged part-cross-sectional view of a preferred tensioning and tightening mechanism as used to anchor and tension the tensioning element in the arrangement of Figures 1 to 3.

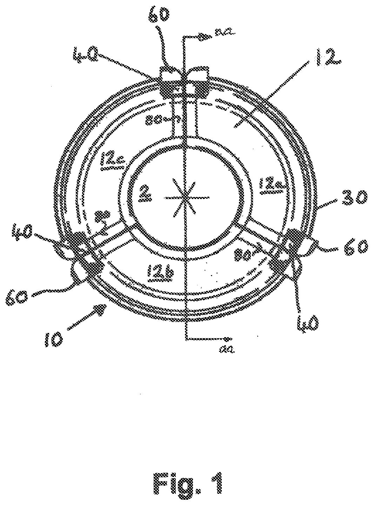

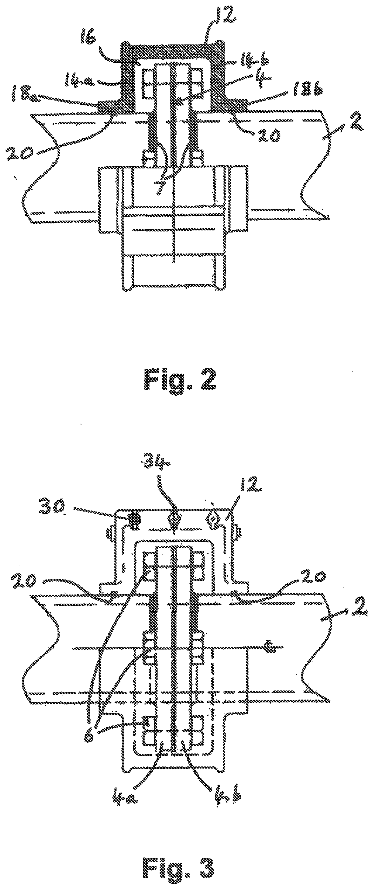

Referring firstly to Figures 1 to 3, a pipe 2, for example a section of a pipeline for transporting e.g. fuel oil, includes a flanged joint 4, in which a pair of radial flanges 4a, 4b (Figure 3), welded as at 7 (Figure 2) to the main pipe 2, are bolted together using by bolts 6. However, the flanged joint 4 is in need of repair, e.g. because of a corrosion-induced leak in or immediately adjacent the flanged joint 4. The pipe repair kit according to this preferred embodiment of the invention that is used to effect this sealing repair is designated generally as 10.

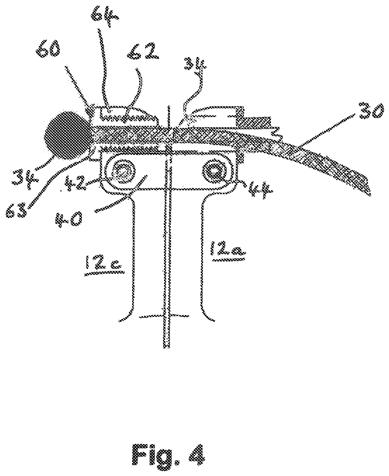

Forming the main body of the repair kit 10 is a metal (e.g. steel) housing 12 which comprises three identical housing segments 12a, 12b, 12c articulatedly coupled to one another by virtue of respective linking plates 40. Each linking plate 40 couples the adjacent pair of housing segments 12 by means of nut and bolt connections 42, 44 at each of its ends (see Figure 4), such that each pair of segments is coupled securely yet flexibly, so that each segment is free to move radially with respect to the pipe 2 as it is drawn radially inwardly under the action of the tensioning mechanism (as described further below).

The housing segments 12a, 12b, 12c may conveniently be formed by moulding, casting or pressing of the appropriate sheet material (e.g. steel or other metal or metal alloy). Each segment 12a, 12b, 12c defines within it an arcuate channel or chamber 16 (as shown in Figure 2) which is shaped and dimensioned to accommodate therewithin the bolted flange joint 4. (Thus, when located together in position around the flange joint 4, the housing segments 12 collectively form a generally circular (or toroidal) recess, chamber or channel around the entire flange joint 4.) The sidewalls 14a, 14b of each housing segment 12, which preferably are oriented substantially radially only with respect to the pipe 2, each terminate in a respective foot portion 18a, 18b that sits against the pipe outer wall adjacent the joint 4 for forming a seal against that pipe wall once the tensioning mechanism is actuated. This sealing action is assisted by virtue of one or more sealing elements or gaskets 20 (Figure 2) located in a or a respective channel or groove formed in the radially innermost face of the respective segment wall foot portions 18a, 18b. Such sealing element(s) 20 may typically be a (or a part of an overall) conventional 0-ring seal, e.g. of resilient synthetic sealing material (e.g. a rubber or plastics material), which is preferably inert or resistant (to any appropriate degree) to the fluid material carried by the pipe 2.

Although in Figure 1 it is shown that adjacent pairs of the housing segments 12 have a significant gap 80 between them - and indeed the presence of such a gap is a preferred feature in order to allow room for the segments to be drawn together as the tensioning mechanism is actuated - it is to be understood that this gap will close somewhat as the tensioning mechanism is actuated to clamp the housing segments into tight sealing abutment against the pipe 2. It is not however excluded that there may be provided a secondary gasket or sealing element in the gap 80 between adjacent housing segments 12, but since any leak in the flanged joint 4 will usually be localised to a specific site on the circumference of the pipe 2, such an inter-segment secondary gasket or seal can be expected not generally to be necessary.

In a first stage of the preferred method of repairing the pipe flange joint 4, the articulated housing segments 12, which are for example pre-coupled in a chain via respective linking plates 40 with just the final one to be connected up, can simply be draped over or placed around the pipe joint 4, and then the final one of the linking plates 40 connected up to couple together the last remaining pair of adjacent housing segments 12. Thus, once in this fully coupled condition the segmented housing 12 encircles the flange joint 4 and is securably held in position by the series of linking plates 40 flexibly coupling together the adjacent pairs of segments 12. They are therefore now ready for actuation of the tensioning mechanism, as will now be explained more fully.

Surrounding the segmented housing 12 is the tensioning means, which in this is preferred embodiment comprises at least one, e.g. three side-by side (as illustrated in Figure 3) single-or multi-strand steel (or other metal or metal alloy) wires or cords 30. Each wire or cord 30 is carried its own toroidal or annular channel or recess 34 in the radially outer walls of the housing segments 12. As shown more explicitly in Figure 4, the wires or cords 30 are each attached to a respective tightening device 60 which is operable (e.g. manually or with the aid of a tool, e.g. a spanner) to shorten the effective circumferential length of the wires or cords 30 so as to tighten them into clamping engagement with (or against the walls of) the housing segments 12, forcing the latter radially inwardly - preferably in the manner of a circumferential array of wedges - towards the central axis of the pipe 2. In this way, as the wires or cords 30 are shortened and tightened, so the housing segments 12 are tightened into sealing abutment against the outer wall of the pipe 2, thereby sealing the flange joint 4 and repairing the leak therein (or thereadjacent).

One of the tightening devices 60 is illustrated more fully in Figure 4. It is to be noted that, as illustrated by way of example only in the general schematic arrangement of Figure 1, any one of the segment boundaries or interfaces between the housing segments 12 may be provided with a or a respective tightening device 60, preferably one for each wire or cord 30. Thus, it is preferred that each wire or cord 30 making up the overall tensioning mechanism is anchored and tensionable by its own dedicated respective tightening device 60, e.g. at its own discrete, circumferentially isolated site on the circumference of the arrangement, as Figure 1 illustrates. Alternatively, however, the wires or cords 30 may instead be anchored collectively at generally one and the same region on the pipe's periphery, but preferably still with each wire or cord being anchored and tensionable via its own dedicated tightening device 60. In this arrangement the collection of tightening devices may thus sit somewhat side-by-side (axially in the direction of the pipe's length) or one-above-the-other (radially with respect to the pipe's radius) at any one only of the locations shown as 60 in Figure 1).

By way of example illustrated in Figure 4, the or each tightening device 60 comprises a hollow screw-threaded bolt 62 with an enlarged head 63 and which is screwable into nut 64 carried atop the linking plate 40 therebelow. Threaded through the hollow bolt 62 is its tensioning wire or cord 30, which is formed with an enlarged termination head or bead 34, which anchors it within the bolt 62 and prevents it being withdrawn therefrom as the bolt 62 is tightened. As shown schematically in Figure 4, the tensioning wire or cord 30 exits the tightening device 60 to the right hand side (as illustrated), and then passes 360 degrees around the complete assembled and secured array or chain of housing segments 12, before reaching its corresponding fixed anchoring point in an offset, yet reversely-oriented location on the same tightening device 60 located behind the tightenable bolt fixing as shown in Figure 4. (Alternatively, the tensioning wire or cord 30 may be anchored by means of a second, discrete-like anchoring element or tightening device 60 located next to it but axially spaced therefrom a short distance.)

Thus, in the final tightening step of the repair method using the kit of this preferred embodiment, once the tensioning wire(s) or cord(s) 30 has/have been passed through and anchored on their respective tightening bolts of their respective tightening means, the bolts can be tightened up by screwing (manually or with the aid of a tool, e.g. a spanner) so as to shorten the effective length of the (or the respective) wire(s) or cord(s) and thereby tighten them in a clamping manner onto the housing segments 12, which thus transmit that tightening, clamping force and pressure, preferably in the manner of a circumferential array of wedges, onto the pipe 2 and/or pipe joint 4 to effect the desired seal and repair thereof.

The kind of pipe whose repair may be particularly well-suited to use of the repair kit and method of this invention includes in particular pipes or conduits for transporting fuel oil or other corrosive fluids, but may alternatively be used to with any fuel, gas or even water pipelines. The invention is however not limited to such applications, and indeed it may well be just as applicable to other types of pipes or pipelines for carrying many different types of industrial or domestic products.

It is to be understood that the above description of preferred embodiments of the various aspects of the invention has been by way of non-limiting examples only, and various modifications may be made from what has been specifically described and illustrated whilst remaining within the scope of the invention as claimed.

## Claims

1. A pipe repair kit (10) for repairing a pipe (2) or pipe joint (4), the kit comprising:
a segmented housing (12) for receiving the pipe (2) or pipe joint (4) to be repaired, the housing (12) comprising a plurality of segments (12a, 12b, 12c) for placement around the pipe (2) or pipe joint (4);
securement means (40) for flexibly securing the segments (12a, 12b, 12c) of the housing together around the pipe (2) or pipe joint (4); and
tensioning means (3a) for surrounding the secured segmented housing (12) and clamping the segments (12a, 12b, 12c)thereof into clamping and sealing relationship with the pipe (2) or pipe joint (4), **characterised in that**:
the segments (12a, 12b, 12c) are of substantially equal radial width and circumferential length;
the segments (12a, 12b, 12c) are each articulated with respect to an adjacent segment via their respective securement means (40); and by
the housing (12) comprising an odd number of segments (12a, 12b, 12c),
such that on one diametrical side of the pipe (12) or pipe joint (4), the joint or interface between any given two adjacent segments (12a, 12b) is not directly diametrically opposite a like joint or interface between adjacent segments (12b, 12c) on the opposite side of the pipe (2) or pipe joint (4), and/or such that the said joint or interface between any given two adjacent segments (12a, 12b) is directly diametrically opposite a substantially central- or intermediate- or mid-portion of one segment (12c) only on the opposite side of the pipe (2) or pipe joint (4).

2. The pipe repair kit (10) of claim 1, wherein the flexible means (40) comprises at least one flexible coupling element (40) linking adjacent segments together, wherein each flexible coupling element (40) is in the form of a linking plate or rod, with its respective ends being swivellably attachable to the respective segments by swivellable (or hingeable) attachment means (42, 44).

3. The pipe repair kit (10) of claim 1 or claim 2, wherein the segments (12a, 12b, 12c) forming the housing are each shaped to define therewithin a hollow arcuate recess or chamber (16) for accommodating a portion of a flange joint (4) whose repair is to be undertaken.

4. The pipe repair kit (10) of claim 3, wherein the recess or chamber (16) is defined by a pair of radially extending sidewalls (14) of the segment, each sidewall (14) terminating at its radially inward end in an axially extending foot portion (18) for abutment against the external wall of the pipe (2) adjacent the site on the pipe (2) or flange joint (4) undergoing repair.

5. The pipe repair kit (10) of claim 4, wherein each foot portion (18) of the segments' sidewalls (14) carries or includes sealing means (20), comprising an arcuate, or circumferential, or at least part-circumferential, sealing member or gasket, for sealing the gap between the segments' sidewalls' foot portions (18) and the pipe wall into abutment with which the segments (12) are to be clamped.

6. The pipe repair kit (10) of claim 5, wherein the sealing means (20) is carried or located in an, or a respective, appropriately sized and shaped lateral or peripheral recess, trough, channel or groove formed in the respective sidewalls' foot portions (18).

7. The pipe repair kit (10) of any preceding claim, wherein the tensioning means (30) comprises at least one tensioning element in the form of a single- or multi-stranded tensioning wire, cord, strap (30) or chain-link band or strap, or a plurality of such tensioning elements arranged in a side-by-side relationship.

8. The pipe repair kit (10) of claim 7, wherein the tensioning element(s) (30) extend(s) substantially continuously around the entire circumference of the pipe (2) or pipe joint (4).

9. The pipe repair kit (10) of any preceding claim, wherein the tensioning means (30) includes one or more tightening means (62, 64), the or each tightening means comprising a turn-buckle or screw- or nut-operated clasp (62) or clamp to which opposite ends of the tensioning means is/are anchored (64) or attached, so that by turning or screwing of the tightening means (62), the tensioning means (30) are shortenable and thereby tightenable into clamping abutment or engagement with the housing segments (12a, 12b, 12c) which then transmit the resulting clamping force or pressure onto the pipe wall (2) or pipe joint flange (4).

10. A method of repairing a pipe (2) or pipe joint (4), comprising:
providing a pipe repair kit (10) according to any one of claims 1 to 9; placing around the pipe (2)or pipe joint (4) the segmented housing (12) comprising the plurality of articulated segments (12a, 12b, 12c);
flexibly securing the articulated segments (12a, 12b, 12c) of the housing together around the pipe (2) or pipe joint (4) by means of the said securement means (40); and
tensioning the said tensioning means (30) surrounding the secured segmented housing (12) so as to clamp the segments (12a, 12b, 12c) thereof into clamping and sealing relationship with the pipe (2) or pipe joint (4).

11. A method according to claim 10, wherein the step of tensioning the said tensioning means (30) surrounding the secured segmented housing (12) so as to clamp the segments (12a, 12b, 12c) thereof into clamping and sealing relationship with the pipe (2) or pipe joint (4) comprises tensioning at least one tensioning element (62) by operation of a or a respective tightening means, so as to contract or shorten the tensioning element (30) into its tightened clamping configuration in abutment against or engagement with the housing segments (12a, 12b, 12c) which thus are sealingly clamped against the pipe (2) or pipe joint (4) so as to effect a sealing repair thereof.

12. A method according to claim 10 or claim 11, wherein as the segmented housing (12) is clamped into place around the pipe (2) or pipe joint (4) by the tensioning of the tensioning means (30), each of the segments (12a, 12b, 12c) exerts its clamping force principally, or predominantly, generally substantially radially inwardly of the pipe (2) or pipe joint (4), in the manner of a wedge.

13. A method according to any one of claims 10 to claim 12, wherein the pipe (2) or pipe joint (4) is a welded flanged pipe joint in a fuel oil pipeline.

14. A pipe (2) or pipe joint (4) having applied thereto a pipe repair kit (10) according to any one of claims 1 to 9.

15. A pipe (2) or pipe joint (4), especially a welded flanged pipe joint, repaired by the method according to any one of claims 10 to 13.

## Patentansprüche

1. Rohrreparatursatz (10) zum Reparieren eines Rohrs (2) oder einer Rohrverbindung (4), wobei der Satz Folgendes umfasst:
ein segmentiertes Gehäuse (12) zum Aufnehmen des/der zu reparierenden Rohrs (2) oder Rohrverbindung (4), wobei das Gehäuse (12) mehrere Segmente (12a, 12b, 12c) zum Platzieren um das Rohr (2) oder die Rohrverbindung (4) umfasst;
Befestigungsmittel (40, 42, 44) zum flexiblen Befestigen der Segmente (12a, 12b, 12c) des Gehäuses miteinander um das Rohr (2) oder die Rohrverbindung (4); und
Spannmittel (30) zum Umgeben des befestigten segmentierten Gehäuses (12) und zum Einspannen der Segmente (12a, 12b, 12c) davon in eine Einspann- und Dichtungsbeziehung mit dem Rohr (2) oder der Rohrverbindung (4), wobei:
die Segmente (12a, 12b, 12c) eine im Wesentlichen gleiche radiale Breite und Umfangslänge haben;
die Segmente (12a, 12b, 12c) jeweils mit Bezug auf ein benachbartes Segment über ihr jeweiliges Befestigungsmittel (40, 42, 44) artikuliert sind;
**dadurch gekennzeichnet, dass**
das Gehäuse (12) eine ungerade Zahl von Segmenten (12a, 12b, 12c) umfasst,
so dass auf einer diametralen Seite des Rohrs (12) oder der Rohrverbindung (4) die Verbindung oder Grenzfläche zwischen beliebigen gegebenen zwei benachbarten Segmenten (12a, 12b) einer gleichen Verbindung oder Grenzfläche zwischen benachbarten Segmenten (12b, 12c) auf der gegenüberliegenden Seite des Rohrs (2) oder der Rohrverbindung (4) nicht direkt diametral gegenüberliegen, und/oder so, dass die genannte Verbindung oder Grenzfläche zwischen beliebigen gegebenen zwei benachbarten Segmenten (12a, 12b) einem im Wesentlichen Zentral- oder Zwischen- oder Mittelabschnitt von einem Segment (12c) nur auf der gegenüberliegenden Seite des Rohrs (2) oder der Rohrverbindung (4) direkt diametral gegenüberliegt.

2. Rohrreparatursatz (10) von Anspruch 1, wobei das Befestigungsmittel (40, 42, 44) wenigstens ein flexibles Kopplungselement (40) umfasst, das benachbarte Segmente miteinander verbindet, wobei jedes flexible Kopplungselement (40) in Form einer/s Verbindungsplatte oder -stabs vorliegt, deren/dessen jeweilige Enden drehbar an den jeweiligen Segmenten durch drehbare (oder gelenkige) Anbringungsmittel (42, 44) angebracht werden können.

3. Rohrreparatursatz (10) von Anspruch 1 oder Anspruch 2, wobei die das Gehäuse bildenden Segmente (12a, 12b, 12c) jeweils so gestaltet sind, dass sie eine hohle bogenförmige Aussparung oder Kammer (16) zum Aufnehmen eines Abschnitts einer Flanschverbindung (4) dazwischen definieren, deren Reparatur durchgeführt werden soll.

4. Rohrreparatursatz (10) von Anspruch 3, wobei die Aussparung oder Kammer (16) durch ein Paar radial verlaufender Seitenwände (14) des Segments definiert wird, wobei jede Seitenwand (14) an ihrem radial einwärtigen Ende in einem axial verlaufenden Fußabschnitt (18) zur Anlage an der Außenwand des Rohrs (2) neben der zu reparierenden Stelle an dem Rohr (2) oder der Flanschverbindung (4) endet.

5. Rohrreparatursatz (10) von Anspruch 4, wobei jeder Fußabschnitt (18) der Seitenwände (14) der Segmente Dichtungsmittel (20) trägt oder beinhaltet, die ein(e) bogenförmige(s) oder umfangsmäßige(s) oder wenigstens teilweise umfangsmäßige(s) Dichtungselement oder Dichtung zum Abdichten der Lücke zwischen den Fußabschnitten (18) der Seitenwände der Segmente und der Rohrwand umfasst, in Anlage mit denen die Segmente (12) eingespannt werden sollen.

6. Rohrreparatursatz (10) von Anspruch 5, wobei das Dichtungsmittel (20) in einer/m jeweiligen entsprechend bemessenen und gestalteten lateralen oder peripheren Aussparung, Mulde, Kanal oder Nut wie in den Fußabschnitten (18) der jeweiligen Seitenwände ausgebildet getragen oder positioniert ist.

7. Rohrreparatursatz (10) eines vorherigen Anspruchs, wobei das Spannmittel (30) wenigstens ein Spannelement in Form eines einzel- oder mehrsträngigen Spanndrahts, -seils, -riemens (30) oder eines Kettengliedbandes oder -riemens oder eine Mehrzahl solcher Spannelemente in einer Seite-an-Seite-Beziehung angeordnet umfasst.

8. Rohrreparatursatz (10) von Anspruch 7, wobei die ein oder mehreren Spannelemente (30) im Wesentlichen kontinuierlich um den gesamten Umfang des Rohrs (2) oder der Rohrverbindung (4) verläuft/verlaufen.

9. Rohrreparatursatz (10) eines vorherigen Anspruchs, wobei das Spannmittel (30) ein oder mehrere Festziehmittel (62, 64) beinhaltet, wobei das oder jedes Festziehmittel eine(n) spannschloss- oder schraub- oder mutterbetätigte(n) Verschluss (62) oder Klammer umfasst, an dem/der gegenüberliegende Enden des Spannmittels verankert (64) oder angebracht sind, so dass durch Drehen oder Schrauben des Festziehmittels (62) die Spannmittel (30) verkürzt und dadurch in Spannanlage oder -eingriff mit den Gehäusesegmenten (12a, 12b, 12c) festgezogen werden können, die dann die/den resultierende(n) Spannkraft oder Spanndruck auf die Rohrwand (2) oden den Rohrverbindungsflansch (4) übertragen.

10. Verfahren zum Reparieren eines Rohrs (2) oder einer Rohrverbindung (4), das Folgendes beinhaltet:
Bereitstellen eines Rohrreparatursatzes (10) nach einem der Ansprüche 1 bis 9;
Platzieren, um das Rohr (2) oder die Rohrverbindung (4), des segmentierten Gehäuses (12), das mehrere artikulierte Segmente (12a, 12b, 12c) umfasst;
flexibles Befestigen der artikulierten Segmente (12a, 12b, 12c) des Gehäuses zusammen um das Rohr (2) oder die Rohrverbindung (4) mittels des genannten Befestigungsmittels (40); und
Festziehen des genannten Festziehmittels (30) um das befestigte segmentierte Gehäuse (12), um dessen Segmente (12a, 12b, 12c) in eine Einspann- und Dichtungsbeziehung mit dem Rohr (2) oder der Rohrverbindung (4) einzuspannen.

11. Verfahren nach Anspruch 10, wobei der Schritt des Festziehens des genannten Festziehmittels (30) um das befestigte segmentierte Gehäuse (12), um seine Segmente (12a, 12b, 12c) in eine Einspann- und Dichtungsbeziehung mit dem Rohr (2) oder der Rohrverbindung (4) einzuspannen, das Spannen von wenigstens einem Spannelement (62) durch Betätigen eines jeweiligen Festziehmittels beinhaltet, um das Spannmittel (30) in seine festgezogene Einspannkonfiguration in Anlage an oder Eingriff mit den Gehäusesegmenten (12a, 12b, 12c) zusammenzuziehen oder zu verkürzen, die somit an dem Rohr (2) oder der Rohrverbindung (4) dichtend eingespannt werden, um eine dichtende Reparatur davon zu bewirken.

12. Verfahren nach Anspruch 10 oder Anspruch 11, wobei während des Einspannens des segmentierten Gehäuses (12) an seinem Ort um das Rohr (2) oder die Rohrverbindung (4) durch Spannen des Spannmittels (30) jedes der Segmente (12a, 12b, 12c) seine Einspannkraft hauptsächlich, oder vornehmlich, allgemein im Wesentlichen radial einwärts von dem Rohr (2) oder der Rohrverbindung (4) in einer keilförmigen Weise ausübt.

13. Verfahren nach einem der Ansprüche 10 bis 12, wobei das Rohr (2) oder die Rohrverbindung (4) eine geschweißte Flanschrohrverbindung in einer Heizölpipeline ist.

14. Rohr (2) oder Rohrverbindung (4), auf die ein Rohrreparatursatz (10) nach einem der Ansprüche 1 bis 9 aufgebracht ist.

15. Rohr (2) oder Rohrverbindung (4), insbesondere eine geschweißte Flanschrohrverbindung, repariert mit dem Verfahren nach einem der Ansprüche 10 bis 13.

## Revendications

1. Équipement de réparation de tuyau (10) pour réparer un tuyau (2) ou un raccord de tuyau (4), l'équipement comprenant :
un logement segmenté (12) pour recevoir le tuyau (2) ou le raccord de tuyau (4) destiné à être réparé, le logement (12) comprenant une pluralité de segments (12a, 12b, 12c) pour un positionnement autour du tuyau (2) ou du raccord de tuyau (4) ;
un moyen d'assujettissement (40, 42, 44) pour assujettir de manière flexible les segments (12a, 12b, 12c) du logement ensemble autour du tuyau (2) ou du raccord de tuyau (4) ; et
des moyens de tensionnement (30) pour entourer le logement segmenté assujetti (12) et fixer les segments (12a, 12b, 12c) de celui-ci en une relation de fixation et d'étanchéisation avec le tuyau (2) ou le raccord de tuyau (4), dans lequel :
les segments (12a, 12b, 12c) ont une largeur radiale et une longueur circonférentielle substantiellement égales et
les segments (12a, 12b, 12c) sont chacun articulés par rapport à un segment adjacent via leur moyen d'assujettissement respectif (40, 42, 44) ;
**caractérisé en ce que**
le logement (12) comprend un nombre impair de segments (12a, 12b, 12c),
de telle sorte que, sur un côté diamétral du tuyau (12) ou du raccord de tuyau (4), le raccord ou l'interface entre n'importe quels deux segments adjacents donnés (12a, 12b) ne soit pas directement opposé(e) diamétralement à un raccord ou une interface similaire entre des segments adjacents (12b, 12c) sur le côté opposé du tuyau (2) ou du raccord de tuyau (4), et/ou de telle sorte que ledit raccord ou ladite interface entre n'importe quels deux segments adjacents donnés (12a, 12b) soit directement opposé(e) diamétralement à une portion substantiellement centrale ou intermédiaire ou médiane d'un segment (12c) seulement sur le côté opposé du tuyau (2) ou du raccord de tuyau (4).

2. Équipement de réparation de tuyau (10) de la revendication 1, dans lequel le moyen d'assujettissement (40, 42, 44) comprend au moins un élément de couplage flexible (40) reliant des segments adjacents ensemble, chaque élément de couplage flexible (40) se présentant sous la forme d'une plaque ou d'une tige de liaison, alors que ses extrémités respectives sont aptes à être attachées de manière basculante à des segments respectifs grâce à des moyens d'attache basculants (ou articulables) (42, 44).

3. Équipement de réparation de tuyau (10) de la revendication 1 ou de la revendication 2, dans lequel les segments (12a, 12b, 12c) formant le logement sont chacun façonnés pour définir avec celui-ci un évidement ou une chambre arqué(e) creux/se (16) pour accueillir une portion d'un raccord à bride (4) dont la réparation doit être entreprise.

4. Équipement de réparation de tuyau (10) de la revendication 3, dans lequel l'évidement ou la chambre (16) est défini(e) par une paire de parois latérales (14) s'étendant dans le plan radial du segment, chaque paroi latérale (14) se terminant au niveau de son extrémité interne dans le plan radial dans une portion pied s'étendant dans le plan axial (18) pour une mise en butée contre la paroi externe du tuyau (2) adjacente à l'emplacement sur le tuyau (2) ou le raccord à bride (4) faisant l'objet de la réparation.

5. Équipement de réparation de tuyau (10) de la revendication 4, dans lequel chaque portion pied (18) des parois latérales (14) des segments porte ou inclut un moyen d'étanchéisation (20), comprenant un joint ou un élément d'étanchéisation arqué, ou circonférentiel, ou au moins circonférentiel en partie, pour étanchéiser l'intervalle entre les portions pied des parois latérales des segments (18) et la paroi de tuyau en butée avec lesquelles les segments (12) doivent être fixés.

6. Équipement de réparation de tuyau (10) de la revendication 5, dans lequel le moyen d'étanchéisation (20) est porté ou localisé dans un poste, ou un poste respectif, parmi un évidement, un creux, un canal ou une rainure latéral(e) ou périphérique, de taille et de forme appropriées, formé(e) dans les portions pied de parois latérales respectives (18).

7. Équipement de réparation de tuyau (10) de n'importe quelle revendication précédente, dans lequel le moyen de tensionnement (30) comprend au moins un élément de tensionnement sous la forme d'un fil, d'une corde, d'une sangle (30) à filin unique ou filins multiples ou d'une sangle ou bande à maillons de chaîne, ou d'une pluralité d'éléments de tensionnement semblables agencés suivant une relation côte à côte.

8. Équipement de réparation de tuyau (10) de la revendication 7, dans lequel l'élément/les éléments de tensionnement (30) s'étend/s'étendent de manière substantiellement continue autour de la totalité de la circonférence du tuyau (2) ou du raccord de tuyau (4).

9. Équipement de réparation de tuyau (10) de n'importe quelle revendication précédente, dans lequel le moyen de tensionnement (30) inclut un ou plusieurs moyens de serrage (62, 64), ledit ou chaque moyen de serrage comprenant une agrafe (62) ou une fixation actionnée par un tendeur, une vis ou un écrou à laquelle des extrémités opposées du moyen de tensionnement est/sont ancrée(s) (64) ou attachée(s), de sorte qu'en tournant ou en vissant le moyen de serrage (62), les moyens de tensionnement (30) soient aptes à être raccourcis et par conséquent serrés en butée de fixation ou en solidarisation avec les segments de logement (12a, 12b, 12c) lesquels transmettent ensuite la force ou la pression de fixation résultante sur la paroi de tuyau (2) ou la bride du raccord de tuyau (4).

10. Procédé de réparation d'un tuyau (2) ou d'un raccord de tuyau (4), comprenant :
la fourniture d'un équipement de réparation de tuyau (10) selon l'une quelconque des revendications 1 à 9 ;
le positionnement, autour du tuyau (2) ou du raccord de tuyau (4), du logement segmenté (12) comprenant la pluralité de segments articulés (12a, 12b, 12c) ;
l'assujettissement de manière flexible des segments articulés (12a, 12b, 12c) du logement ensemble autour du tuyau (2) ou du raccord de tuyau (4) au moyen desdits moyens d'assujettissement (40) ; et
le tensionnement desdits moyens de tensionnement (30) entourant le logement segmenté assujetti (12) de sorte à fixer les segments (12a, 12b, 12c) de celui-ci en une relation de fixation et d'étanchéisation avec le tuyau (2) ou le raccord de tuyau (4).

11. Procédé selon la revendication 10, dans lequel l'étape de tensionnement dudit moyen de tensionnement (30) entourant le logement segmenté assujetti (12) de sorte à fixer les segments (12a, 12b, 12c) de celui-ci en une relation de fixation et d'étanchéisation avec le tuyau (2) ou le raccord de tuyau (4) comprend le tensionnement d'au moins un élément de tensionnement (62) grâce à l'actionnement d'un ou d'un moyen de serrage respectif, de sorte à contracter ou raccourcir l'élément de tensionnement (30) jusque dans sa configuration de fixation serrée en butée contre ou en solidarisation avec les segments de logement (12a, 12b, 12c) lesquels sont ainsi fixés de manière étanchéisante contre le tuyau (2) ou le raccord de tuyau (4) de sorte à effectuer une réparation d'étanchéisation de celui-ci.

12. Procédé selon la revendication 10 ou la revendication 11, dans lequel au fur et à mesure que le logement segmenté (12) est fixé en place autour du tuyau (2) ou du raccord de tuyau (4) par le tensionnement du moyen de tensionnement (30), chacun des segments (12a, 12b, 12c) exerce sa force de fixation principalement, ou de manière prédominante, vers l'intérieur dans le plan substantiellement radial de manière générale du tuyau (2) ou du raccord de tuyau (4), à la manière d'une cale.

13. Procédé selon l'une quelconque de la revendication 10 à la revendication 12, dans lequel le tuyau (2) ou le raccord de tuyau (4) est un raccord de tuyau à bride soudé dans un pipeline de fioul.

14. Tuyau (2) ou raccord de tuyau (4) sur lequel est appliqué un équipement de réparation de tuyau (10) selon l'une quelconque des revendications 1 à 9.

15. Tuyau (2) ou raccord de tuyau (4), en particulier un raccord de tuyau à bride soudé, réparé par le procédé selon l'une quelconque des revendications 10 à 13.
